# EUROPEAN PATENT APPLICATION

(11) **EP 2 615 714 A1**
(43) Date of publication of application: **17.07.2013**
(21) Application number: 13150835.0
(22) Date of filing: 10.01.2013
(51) Int. Cl.: H02J 7/00, H02J 7/04

(54) **Method and system for battery charging control of a terminal**

(30) Priority: 12.01.2012 KR 20120003676
(71) Applicant: Samsung Electronics Co., Ltd, Gyeonggi-do 443-742 (KR)
(72) Inventor: Jung, Kuchul, 443-742 Gyeonggi-do (KR); Kim, Sangsoon, 443-742 Gyeonggi-do (KR); Park, Cheolwoong, 443-742 Gyeonggi-do (KR); Lee, Kwangsub, 443-742 Gyeonggi-do (KR); Jang, Seyoung, 443-742 Gyeonggi-do (KR)
(74) Representative: Jenkins, Richard Gavin

(57) **Abstract**

A battery charging control system of a terminal is provided. The system includes a terminal (100) in which a battery (200) is mounted and a charger (300) connected to the terminal to provide a charging current for charging the battery. The charger charges the battery with a maximum margin current value that is greater than a rated current value of the charger.

## Description

### BACKGROUND OF THE INVENTION

### 1. Field of the Invention:

The present invention relates to battery charging of a terminal. More particularly, the present invention relates to a method and a system for controlling battery charging to be capable of increased charging speed and stability by using a charger of the related art.

### 2. Description of the Related Art:

As an electronic terminal is developed into portable form, the number of users of the electronic terminal increases. An electronic terminal has a mobile communication function, thereby attracting more users. Additionally, an electronic terminal of the related art is designed with expanded user functions in order to satisfy various user needs. For example, the electronic terminal of the related art controls various user functions such as, for example, storing, reproducing and playing music files, storing, reproducing and playing video files, document viewing functions, document writing functions, photographing functions, and broadcast receiving functions. In order to support various functions, the electronic terminal consumes a large amount of power. The electronic terminal of the related art employs a battery to supply power and the battery is manufactured in a secondary battery form which can be recharged after use.

Methods of charging a battery are largely divided into two methods. One method is to provide only the battery and a charger and to directly charge the battery with the charger. Another method is to mount the battery within the terminal and connect the charger to one side of the terminal to charge the battery disposed inside the terminal. These two methods are adaptively used according to a user's situation or whether a device required for charging is provided.

For a charging circuit in the charging method using the charger described above, a linear charger is used. In the linear charger, an input current is provided as an output current and energy corresponding to a voltage drop is consumed by generating heat such that charging becomes inefficient. Thus, a switching charger has been developed and distributed to replace the linear charger; however, the switching charger has a relatively high cost and an increased size, thereby having lower utility.

Therefore, a need exists for a system and method for providing an improved linear battery charger that is capable of charging a terminal more quickly and efficiently.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems, and/or disadvantages and to provide at least the advantages described below. Accordingly, an aspect of the present invention is to provide a method and a system for controlling battery charging of a terminal in order to charge the terminal more efficiently and more quickly by using a linear charger.

In accordance with an aspect of the present invention, a battery charging control system of a terminal is provided. The system includes a terminal in which a battery is mounted and a charger connected to the terminal to provide a charging current for charging the battery, wherein the charger charges the battery with a maximum margin current value that is greater than a rated current value of the charger.

In accordance with another aspect of the present invention, a battery charging control method of a terminal is provided. The method includes connecting a charger to a terminal in which a battery is mounted and performing a maximum margin current charging mode in which the charger charges the battery with a maximum margin current value that is greater than a rated current value of the charger.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description in conjunction with the accompanying drawings, in which:

FIG. 1 is a view illustrating a schematic configuration of a battery charging control system of a terminal according to an exemplary embodiment of the present invention;

FIG. 2 is a block diagram illustrating a detailed configuration of a terminal according to an exemplary embodiment of the present invention;

FIG. 3 is a circuit diagram illustrating a terminal charging circuit according to an exemplary embodiment of the present invention;

FIG. 4 is a view illustrating a detailed configuration of a controller of a terminal such as, for example, the terminal shown in FIG. 2 according to an exemplary embodiment of the present invention;

FIG. 5 is flowchart illustrating a battery charging control method of a terminal according to an exemplary embodiment of the present invention; and

FIG. 6 is a graph showing a battery charge profile of a terminal battery charging control system according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

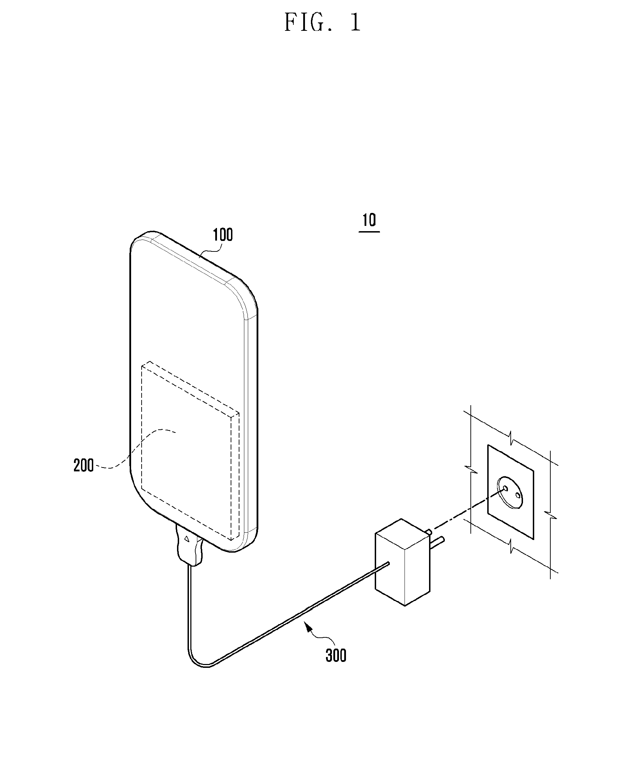

FIG. 1 is a view illustrating a schematic configuration of a battery charging control system of a terminal according to an exemplary embodiment of the present invention.

Referring to FIG. 1, a terminal charging system 10 may include a terminal 100, a battery 200, and a charger 300.

In the terminal charging system 10 having the above configuration, the charger 300 may have one side connected to an external power source and the other side connected to the terminal 100 while the battery 200 is mounted within the terminal 100. The charger 300 may have a connector corresponding to a connection unit provided on the terminal 100 so as to connect to the terminal 100. For example, when the terminal 100 has a 10-pin connection unit, the connector of the charger 300 may be manufactured as a connector that is connected to the 10-pin connection unit. The charger 300 is connected to a charging circuit, which is a linear charger type provided on the terminal 100, and accordingly, the charger 300 may provide an input current requested from the charging circuit to the terminal 100 that is similar to an operation of a Low Drop Output (LDO) module. Particularly, the charger 300 may support to charge the battery 200 with a certain current value greater than a rated current that is supportable by the charger 300. When the rated current value of the charger 300 is identified, the terminal 100 may detect a maximum margin current value corresponding thereto and support to charge the battery 200 using the maximum margin current value. A maximum margin may be a value that defines a permissible range of the current and the voltage set during the designing of the charger 300.

Through this process, the voltage of the charger 300 may be dropped during the process of charging the battery 200. For example, when the charger 300 is designed to charge the battery 200 with 700mA at 5V, the terminal 100 may identify the maximum margin value to 700mA and control to charge the battery 200 with the maximum margin current value thereof, e.g., 850mA. Accordingly, the 5V voltage of the charger 300 may be dropped due to a supply of current higher than a rated current. For example, the charger 300 may have a voltage drop from 5V to 4.5V-4V.

Additionally, the battery 200 may have a voltage drop from a charged voltage due to discharge of the battery 200 based on power usage. For example, the battery 200 may have a voltage of 3V or 2V that is less than 4V when power is discharged. While the charger 300 charges the battery 200 with 4.5V-4V voltage and 850mA, the charger 300 may have an increased battery voltage as the battery 200 is gradually charged, thereby decreasing the charging current. As a result, the voltage of the charger 300 may return to a designed value, e.g., 5V. The charger 300 may then charge the battery 200 with the designed rated current and rated voltage.

As described above, the terminal charging system 10 charges the battery 200 with the maximum margin current value that is greater than the rated current of the charger 300 such that a voltage of the charger 300 is lowered to reduce a voltage difference from the voltage of the battery 200 and to reduce heat generated in the charging circuit of the terminal 100 due to the voltage difference, thereby charging the battery 200 more quickly. The charging method described above uses the maximum margin current of the charger 300, therefore, hardware loss to the charger 300 or the terminal 100 may not occur and the battery 200 may be more quickly charged. Also, inefficient energy transfer that may occur due to the generation of heat may be prevented.

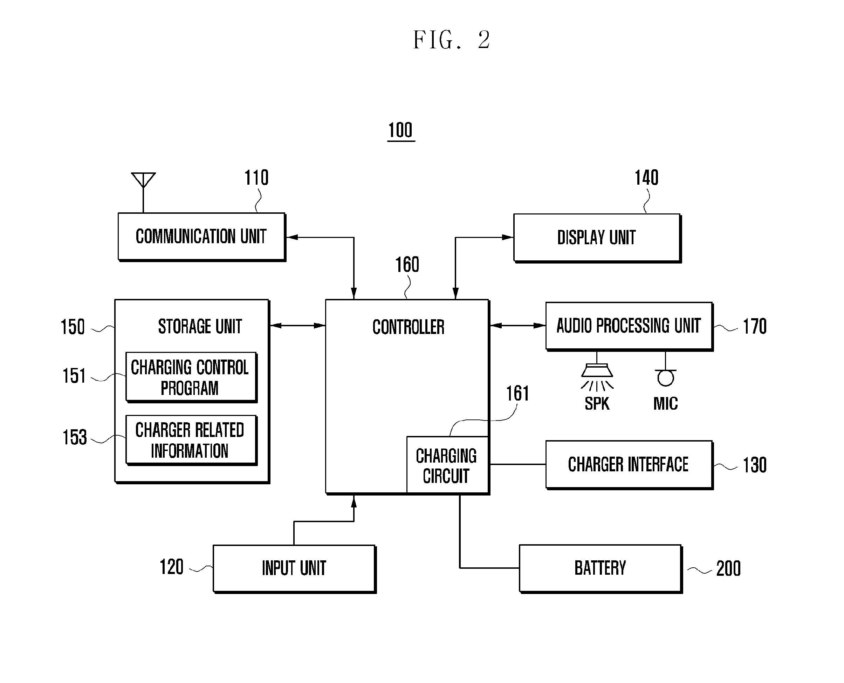

FIG. 2 is a block diagram illustrating a detailed configuration of a terminal according to an exemplary embodiment of the present invention.

Referring to FIG. 2, the terminal 100 may include a communication unit 110, an input unit 120, a charger interface 130, a display unit 140, a storage unit 150, an audio processing unit 170, and a controller 160.

In the terminal 100 having the above configuration, when the charger 300 is connected to the charger interface 130 and the battery 200 is connected to the charging circuit 161, the controller 160 controls the charging circuit 161 such that the charger 300 charges the battery 200 with the maximum margin value. Accordingly, the terminal 100 may use the maximum margin current value of the charger 300 to lower a supply voltage of the charger 300, thereby reducing the voltage difference from the battery 200, such that heat generation of the charging circuit 161 due to the voltage difference may be prevented and charging of the battery 200 may occur more quickly. Hereafter, each element of the terminal 100 may be described with respect to a role and a function thereof for supporting a more efficient battery charging function.

The communication unit 110 may be included if the terminal 100 is manufactured to support a communication function. Therefore, if the terminal 100 does not support a communication function, the communication unit 110 may be omitted. Additionally, the communication unit 110 may be provided in the form of a mobile communication module in order to support the communication function, and more particularly, a mobile communication function of the terminal 100. The communication unit 110 may form a communication channel with a mobile communication system and support signal transmission and reception for performing the mobile communication function of the terminal 100. For example, the communication unit 110 may form at least one of a voice service channel, a video service channel, and a data service channel with the mobile communication system, and may support the transmission and reception of a particular signal according to a corresponding service channel.

The communication unit 110 may obtain information of the charger 300 from an external source. For example, the communication unit 110 may form a communication channel with a web server or other terminal which provides information related to the charger 300, and may receive information about the charger 300 that is currently connected from the corresponding web server or the other terminal. The received information about the charger 300 may be stored in the storage unit 150. Alternatively, the communication unit 110 may receive various charger related information 153 by connecting to a web server or other terminal at a predetermined time point according to user control, and may store the received information 153 in the storage unit 150 according to control of the controller 160. Thus, the stored charger related information 153 may be used in detecting the maximum margin current value of the charger 300. Alternatively, according to a designer's intent, collecting the charger related information 153 may not be separately performed, but rather, a uniform maximum margin current value may be applied according to a predefined design without distinguishing the charger 300 to support the charging of the battery 200. In this case, the communication unit 110 may omit a process of collecting the charger related information 153.

The input unit 120 may generate various input signals required to operate the terminal 100. The input unit 120 may be configured in various input means such as, for example, a keyboard, a keypad, or a key button depending on the compatibility of the terminal 100. Additionally, when the display unit 140 is provided as a touch screen, the input unit 120 may be configured as a touch map outputted on the touch screen. The input unit 120 may generate an input signal that can select one of a maximum margin current charging mode and a general charging mode. The generated input signal may be transmitted to the controller 160, and the use of a current in the charger 300 may be controlled depending on a corresponding mode. Functions of supporting a maximum margin current charging mode and a general charging mode may also be limited according to the designer's intent. For example, the terminal 100 may support only the maximum margin current charging mode as a default.

The charger interface 130 is an interface to which the charger 300 is inserted. The charger interface 130 may be provided as a connection unit having a configuration so as to allow the connector provided in the charger 300 to be inserted into and fixed therein. The charger interface 130 may include terminals that connect to power terminals formed on the connector. Additionally, the charger interface 130 may include a terminal which obtains information that distinguishes the type of the charger 300 when the charger 300 is inserted thereto. Through this terminal, the controller 160 may collect identification information for identifying a corresponding charger 300 when the charger 300 is coupled thereto. The charger identification information may include information for distinguishing the type of the charger 300. For example, the charger identification information may be unique resistance information of the charger 300, or may include other physical characteristic information about the charger 300, and the terminal may be formed as a terminal that may obtain the physical characteristic information about the charger 300.

The display unit 140 is configured to provide various screen interface needed for operating the terminal 100. For example, the display unit 140 may support a standby screen or a menu screen that is needed for operating the terminal 100. Particularly, the display unit 140 may support various screen displays related to operating the charger 300. For example, when the charger 300 is currently charged with the maximum margin current value, the display unit 140 may output an image or text corresponding to the maximum margin current charging mode to at least one portion of the screen. Also, when the charger 300 charges the battery 200 to increase the voltage of the battery 200 to be equal to or higher than a predetermined voltage, and thus the voltage of the charger 300 returns to a normal level, the display unit 140 may output an image or text corresponding to the general mode to at least one portion of the screen. A user may identify a charging state of the battery 200 by identifying a switch of the charging mode.

When the charger 300 is inserted, the display unit 140 may output information about the type of the corresponding charger 300, and may output the charger related information 153 that corresponds to source information about the corresponding charger 300. For example, the terminal 100 may receive the source information per the type of the charger 300 from a web server or from another terminal at the time of manufacturing, and may store the source information in the storage unit 150. When the charging is completed, the display unit 140 may output information indicating completion of the charging on one side of the screen.

The display unit 140 may output a control map which instructs the switch of the charging mode. The control map may include items that support the selection of the maximum margin current charging mode and the general charging mode. Additionally, the display unit 140 may support a touch screen function. When the display unit 140 supports the touch screen function, the display unit 140 may be configured such that a display panel and a touch panel are overlapped with each other. An image corresponding to the above described control map may be outputted to the display panel. The touch panel may set a touch effective area and a touch non-effective area in order to operate the output control map on the display panel and to transmit a touch event generated in the touch effective area to the controller 160. Here, the general charging mode is a mode that supports charging according to the rated current and the rated voltage of the charger 300, and that charges according to a current and a voltage supported by the charger 300. The maximum margin current charging mode is a mode in which the current of the charger 300 is induced to the maximum margin current value and provided to the battery 200 according to the control of the charging circuit 161 of the controller 160.

The audio processing unit 170 supports reproducing and outputting various audio data generated during operation of the terminal 100. The audio processing unit 170 may include a speaker SPK for outputting the audio data and the terminal 100 may include a microphone MIC when the terminal 100 supports a communication function and a function of providing a user's voice. Particularly, the audio processing unit 170 may output various effective sounds and announcement sounds related to charging of the battery 200. For example, when the charger 300 is connected with the terminal 100 and the terminal is being turned on in order to charge the battery 200, the audio processing unit 170 may output the effective sound or the announcement sound in order to indicate the connection of the charger 300. Also, when a currently set mode, e.g., the maximum margin current charging mode, is set according to the control of the controller 160, the audio processing unit 170 may output the announcement sound indicating such event or may output a corresponding effective sound. Additionally, when the maximum margin current charging mode is switched to the general charging mode in which the battery 200 is charged based on the rated current and the rated voltage of the charger 300, the audio processing unit 170 may support to output an alert sound or the announcement sound for indicating such event. When the charging of the battery 200 is completed, the audio processing unit 170 may support to output an announcement sound or an effective sound corresponding to completion of the charging. The output of the announcement sound or the effective sound of the audio processing unit 170 described above may be executed or omitted according to a setting of the terminal 100, and a corresponding function may be supported or not supported depending on a particular design.

The storage unit 150 may store various basic operating systems and various application programs and algorithms needed to operate the terminal 100. In particular, the storage unit 150 may store a charging control program 151 for charging the battery 200 and may store the charger related information 153.

The charging control program 151 is a program that controls to selectively operate the maximum margin current charging mode and the general charging mode during the process of charging the battery 200. The charging control program 151 may include any of a routine for setting one of the maximum margin current charging mode and the general charging mode according to an input signal, a routine for identifying a type of the charger 300 when the charger 300 is connected, and a routine for detecting the maximum margin current value of the corresponding charger 300 by determining the charger related information 153 according to the type of the charger 300. The charging control program 151 may include a routine for automatically obtaining charger related information 153 regarding the type of the corresponding charger 300 by accessing a web server when the charger related information 153 regarding the type of the corresponding charger 300 is not provided. Also, the charging control program 151 may include any of a routine for controlling to provide the detected maximum margin current value from the charger 300 to the battery 200, a routine for determining the charging state of the battery 200 while the battery 200 is charged with the provided maximum margin current value, and a routine for outputting the announcement sound, text, or image according to the charging state of the battery 200.

The charger related information 153 is information which, depending on the type of the charger 300 and the charger related information 153, may include the rated current value according to the type of the charger 300 and the maximum margin value according to the type of the charger 300.

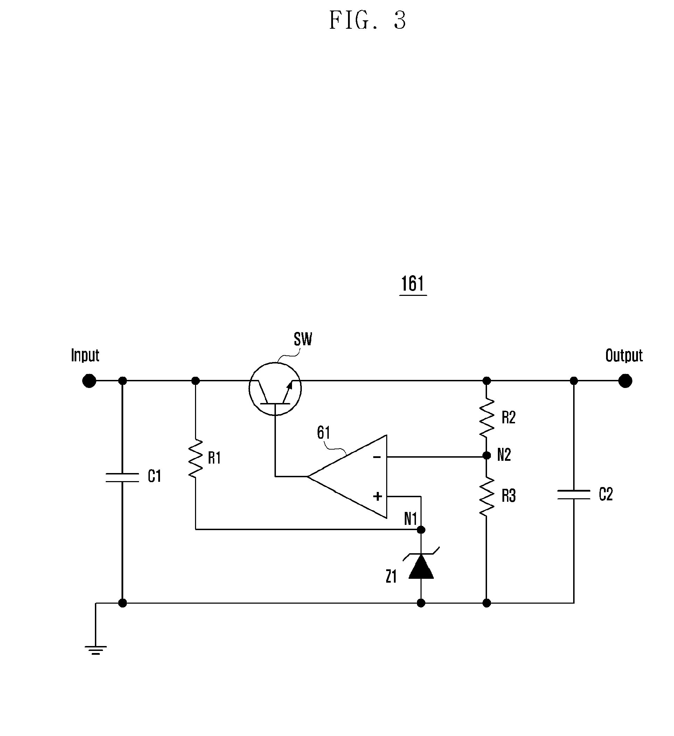

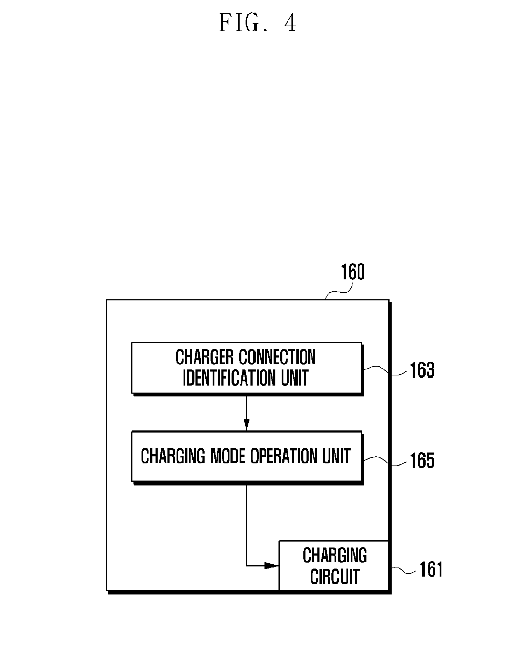

The controller 160 is configured to control various signal flows and transfer, process, deletion or editing of information required to operate the terminal 100. The controller 160 may control the charging of the battery 200 according to an exemplary embodiment, and to this end, the controller 160 may include the charging circuit 161 as shown in FIG. 3 and may include a confirmation shown in FIG. 4 for controlling the charging circuit 161.

FIG. 3 is a circuit diagram illustrating a terminal charging circuit according to an exemplary embodiment of the present invention. That is, FIG. 3 is a circuit diagram illustrating the terminal charging circuit 161 for controlling the linear charger 300 to which an exemplary embodiment of the present invention applies. FIG. 4 is a view illustrating a detailed configuration of a controller of a terminal such as, for example, the terminal shown in FIG. 2 according to an exemplary embodiment of the present invention. That is, FIG. 4 is a view illustrating a detailed configuration of the controller 160 of the terminal 100.

Referring to FIG. 3, the charging circuit 161 may include an input terminal and an output terminal and may include any of a first capacitor C1 and a first resistor R1 that may be respectively connected in parallel to any of the input terminal, a switching element SW disposed between the input terminal and the output terminal, a comparator 61 for controlling turn-on and turn-off of the switching element SW, a first node N1 connected to a first input terminal (+) of the comparator 61, a second node N2 connected to a second input terminal (-) of the comparator 61, a zener diode Z1 connected to the first node N1, division resistors R2, R3 including a second resistor R2 and a third resistor R3 that are connected in parallel to the second node N2, and a second capacitor C2 connected in parallel to the output terminal.

In the charging circuit 161 having the above configuration, an input voltage at the input terminal passes through the zener diode Z1 to be provided to the first input terminal (+) of the comparator 61 and a voltage at the output terminal is divided by the division resistors R2, R3 and provided to the second input terminal (-) of the comparator 61. As a result, when a voltage of the battery 200 connected to the output terminal is greater than a voltage supplied to the charger 300 connected to the input terminal, the switching element SW may be turned off by an output of the comparator 61. When the voltage at the input terminal is greater than the voltage at the output terminal, the switching element SW is turned on according to the output of the comparator 61 such that a charging current of the input terminal is provided to the battery 200 through the output terminal. The charger 300 connected to the input terminal may provide a predetermined charging current according to the control of the controller 160. When the charger 300 is connected, the controller 160 may control to provide, as a default, a current value greater than the rated current by the maximum margin. When the terminal 100 is designed such that rated current information of the charger 300 cannot be identified, the controller 160 may set a particular current value as the maximum margin current value as a default and control to provide the corresponding maximum margin current value from the charger 300. Such control may be operated under the condition that only a predefined charger 300 may be used for charging the terminal 100. Accordingly, when the charger 300 is inserted, but is not a predefined charger model, the terminal 100 may output an announcement message or announcement sound which suggests using the predefined charger model. Also, when the charger 300 is not a predefined charger, and the rated current information thereof cannot be collected, the terminal 100 may control to charge the battery 200 with a current provided by the charger 300. When the rated current information of the charger 300 can be collected, the controller 160 may set the maximum margin current value based on the rated current of the corresponding charger 300 and control the charging current induced by the charger 300 to be the maximum margin current.

Referring to FIG. 4, the controller 160 may include a charger connection identification unit 163 and a charging mode operation unit 165 to control the charging circuit 161.

When the external device is connected to the charger interface 130, the charger connection identification unit 163 determines whether the external device is the charger 300 or a Universal Serial Bus (USB). To this end, the charger connection identification unit 163 prepares a terminal for determining the external device and identifies which device is the external device by identifying a change in a physical characteristic when the external device is connected to a corresponding terminal. For example, the charger connection identification unit 163 may determine the external device by comparing a change in resistance generated when the external device is connected, with information pre-stored in the storage unit 150 that matches with a corresponding change value of the physical characteristic. The charger connection identification unit 163 may provide communication control for supporting the USB device if the connected external device is the USB device.

Additionally, when the charger 300 is connected to the charger interface 130, the charger connection identification unit 163 may alert the charger mode operation unit 165 to the connection of the charger 300. During this process, when the rated current according to the type of the charger 300 may be identified, the charger connection identification unit 163 may transmit corresponding information to the charger mode operation unit 165. If the rated current information of the charger 300 is not provided, the charger connection identification unit 163 may perform a process of receiving the rated current information according to the type of the charger 300, i.e., the charger related information 153 according to a predefined routine from a web server or other terminal. Collecting the charger related information 153 may occur according to the designer's design. When a charger related information identification function is not provided, the charger connection identification unit 163 may convey the connection of the charger 300 to the charging mode operation unit 165.

When the charger 300 is connected, the charging mode operation unit 165 may control the charging circuit 161 to provide a power provided by the charger 300 to the battery 200. In this process, the charging mode operation unit 165 may control the charging circuit 161 such that the charging current provided by the charger 300 is the maximum margin current value. To this end, the charging mode operation unit 165 may receive the rated current information and maximum margin information of the connected charger 300 from the charger connection identification unit 163 and determine the maximum margin current value based on the received information. Accordingly, the charging mode operation unit 165 may support to provide a charging current corresponding to the maximum margin current value from the charger 300 to the battery 200.

If the charger related information 153 is not transmitted from the charger connection identification unit 163, the charging mode operation unit 165 may determine the rated current of the charger 300 as a certain value, e.g., predefined maximum margin current value according to a predefined routine. Also, the charging mode operation unit 165 may control the charging circuit 161 to provide the charging current according to the maximum margin current value determined by the charger 300. For example, the charging of the battery 200 may be controlled based on the maximum margin current value that is predefined as default. If the corresponding charger 300 is not a predefined charger 300 according to identifying information about the charger 300, the charging mode operation unit 165 may support to output a message or announcement sound requesting connection of the predefined charger 300.

As described above, a system 10 which charges the battery mounted on the terminal according to exemplary embodiments of the present invention may support to provide the charging current of the charger 300 to the battery 200 at the maximum margin current value greater than the rated current value which can be provided by the charger 300. When a voltage drop occurs due to the supply of the charging current being greater than the rated current by the charger 300, heat generation in the charging circuit of exemplary embodiments of the present invention is decreased according to a reduction in the voltage difference between the battery 200 and the charger 300. As a result, the charging circuit and a system according to exemplary embodiments of the present invention may provide the charging current provided by the charger 300 at the maximum margin while reducing heat generation in the charging circuit 161, thereby causing the batteries to charge more quickly.

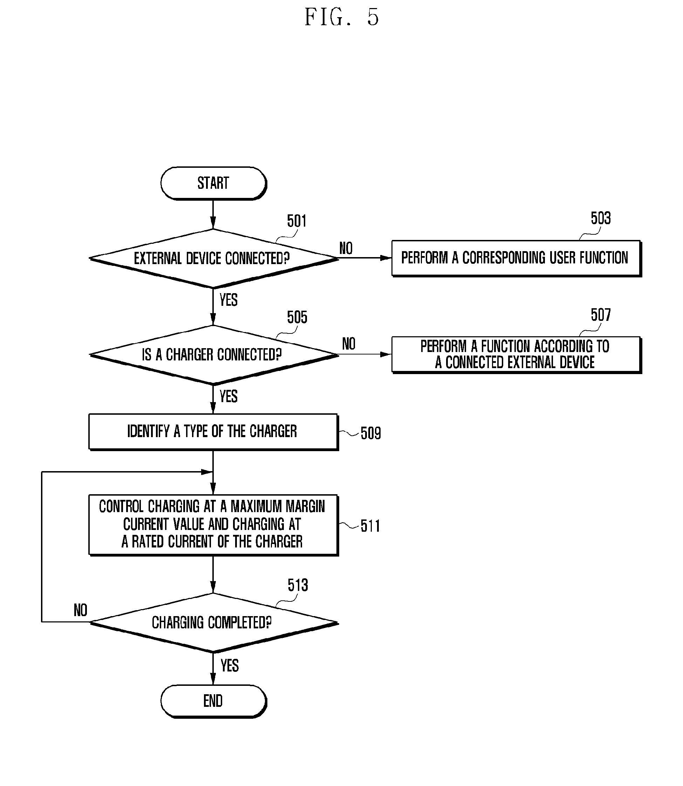

FIG. 5 is flowchart illustrating a battery charging control method of a terminal according to an exemplary embodiment of the present invention.

Referring to FIG. 5, in the terminal charging control method of an exemplary embodiment of the present invention, the controller 160 of the controller 100 may first identify whether an external device is connected in step 501. Here, when the external device is not connected, the controller 160 may proceed to step 503 to support operating a user function of the terminal 100 according to the user control. For example, the controller 160 may perform signal flow control for performing a file reproducing function, a file search function, a web connection function, a broadcast receiving function, or a call function, according to the user control.

When the external device is connected in step 501, the controller 160 may proceed to step 505 to identify whether the corresponding external device is the charger 300. For example, when the external device is connected to the charger interface 130, the controller 160 may determine a change in a physical characteristic value according to the connection with the external device and identify whether the connected device is the charger 300 by comparing the corresponding information change with predefined information. When the external device is not the charger 300, the controller 160 may proceed to step 507 to perform a function according to the connected external device. For example, if the external device is a USB, the controller 160 may perform a USB communication and support transmitting and receiving information according to the user control. If the charger 300 is a USB type charger, the controller 160 may control to charge the battery 200 according to a USB method. Also, if an external device which supports a video/audio output function is connected, the controller 160 may control to output a video/audio that is currently reproduced to the external device according to a user request.

When the charger 300 is connected in step 505, the controller 160 proceeds to step 509 to identify the type of the charger 300. This step may be omitted depending on whether a corresponding function of the terminal 100 is supported, or whether a type of information notification support function of the charger 300 is performed. For example, when the terminal 100 is designed to identify only the connection of the charger 300, or the charger 300 does not provide separate information for identifying the type information, step 509 may be omitted.

When the connection of the charger 300 is identified or the type of information of the charger 300 is identified, the controller 160 may proceed to step 511 to control charging at the maximum margin current value and charging at the rated current. In other words, when the charger 300 is connected, the controller 160 controls the charging circuit 161 to control such that the charger 300 provides the charging current corresponding to the maximum margin current value to the battery 200. In this process, as the battery 200 is charged with the maximum margin current, the current of the battery 200 is charged and the voltage of the battery 200 is gradually increased. When the voltage of the battery 200 is increased, the charging current of the charger 300 is lowered and the voltage of the charger 300 is recovered to a normal designed voltage. Accordingly, the charger 300 charges the battery 200 with the rated current.

The controller 160 may identify whether the charging of the battery 200 is complete, e.g., whether the voltage of the battery 200 is equal to or greater than a charging current supply voltage of the charger 300. When the voltage of the battery 200 is equal to or greater than the charging current supply voltage of the charger 300, the controller 160 may terminate the charging in step 513. If the charging of the battery 200 is not completed in step 513, the controller 160 may return to step 511 to repeat the subsequent steps.

As described above, in the battery charging control method of the terminal of exemplary embodiments of the present invention, the rated current value and the maximum margin of the charger 300 are identified to charge the battery 200 with the maximum margin current. Additionally, when the battery 200 is charged to increase the voltage thereof, the charging current of the charger 300 is decreased. Accordingly, the battery 200 is charged with the charging current and voltage designed in the charger 300. Thus, the charging control method of exemplary embodiments of the present invention may rapidly charge a battery with a charging current that is higher than the rated current.

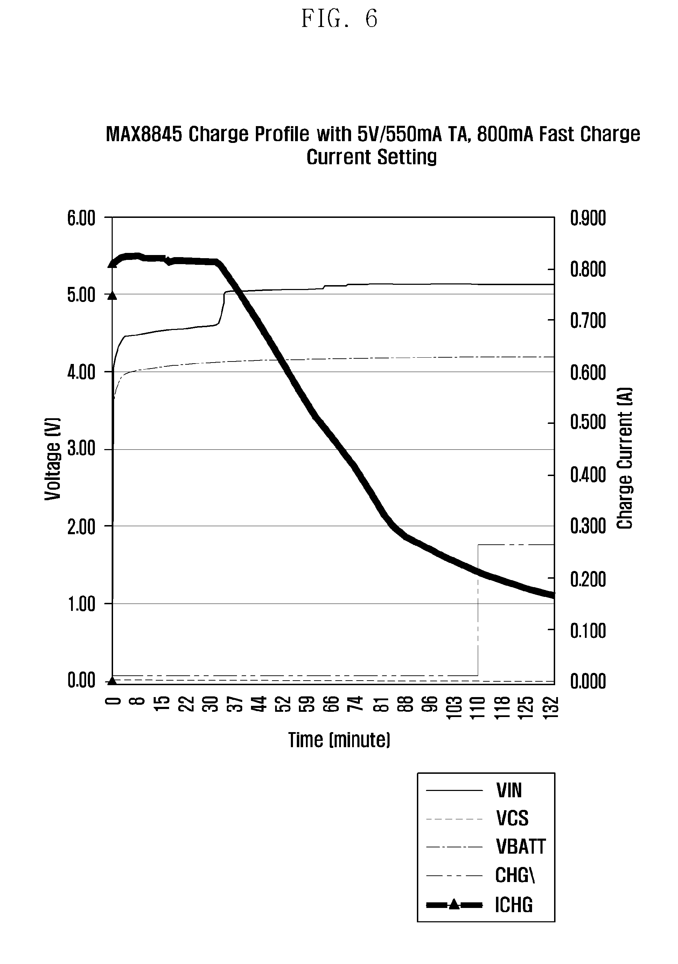

FIG. 6 is a graph showing a battery charge profile of a terminal battery charging control system according to an exemplary embodiment of the present invention.

Referring to FIG. 6, by charging the battery 200 at a maximum margin current value greater than the rated current of the charger 300, a voltage drop occurs in the charger 300 while charging the battery with the maximum margin current. As the battery 200 is rapidly charged such that the battery 200 is charged with a charging current designed to increase the voltage of the battery 200, the charging current of the charger 300 is decreased. As a result, the battery 200 returns to the rated voltage. Next, the charger 300 may control the charging of the battery 200 according to the general charging mode based on the designed rated current and rated voltage.

The terminal 100 may further include various additional modules according to the form in which the terminal 100 is provided. In other words, when the terminal 100 is a communication terminal, the terminal 100 may further include elements that are not mentioned in the above, for example, any of a short range communication module for performing a short range communication, an interface for data transmission and reception according to a wired communication method or a wireless communication method of the terminal 100, an internet communication module for performing an internet function by communicating an internet network, and a digital communication module for performing a function of receiving and reproducing a digital broadcast. With the convergence of digital devices, there may be many digital devices and modifications thereof not listed in the present disclosure, and it will be appreciated that elements equivalent to elements noted herein can also be included in the terminal 100. The above should be easily appreciated by a person of ordinary skill in the art.

Further, the terminal 100 may include all mobile communication terminals that operate based on communication protocols corresponding to various communication systems, as well as all information technology devices, multimedia devices and their associated application devices, such as a Portable Multimedia Player (PMP), a digital broadcasting player, a Personal Digital Assistant (PDA), a music reproducing device (for example, a Moving Picture Experts Group (MPEG)-1 or MPEG-2 Audio Layer 3 (MP3) player), a mobile game terminal, a smart phone, a laptop, and a handheld Personal Computer (PC).

As described above, according to the method and the system for controlling battery charging of a terminal in exemplary embodiments of the present invention, the battery may be charged more quickly and more efficiently by using a linear charger.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A battery charging control system of a terminal, the system comprising:
a terminal in which a battery is mounted; and
a charger connected to the terminal to provide a charging current for charging the battery,
wherein the charger charges the battery with a maximum margin current value that is greater than a rated current value of the charger.

2. The system of claim 1, wherein the charger has a voltage level lower than a rated voltage during a period when the battery is charged with the maximum margin current value.

3. The system of claim 2, wherein the maximum margin current value is decreased as the battery is charged with a rated current.

4. The system of claim 3, wherein the charger charges the battery with the rated voltage while charging the battery with the rated current.

5. The system of claim 1, wherein the terminal comprises:
a charger interface connected to the charger;
a charging circuit connected to the charger interface and configured to control a magnitude of the charging current provided from the charger; and
a controller configured to control to provide the charging current provided from the charging circuit to the mounted battery.

6. The system of claim 5, wherein the controller is configured to identify a type of the charger when the charger is connected with the battery, configured to obtain rated current information according to the identified type of the charger, and configured to determine the maximum margin current value of the charger based on the obtained rated current information.

7. The system of claim 5, further comprising at least one of:
a communication unit configured to collect rated current information of the charger, and
a display unit configured to output at least one of an image and text for indicating a state in which the battery is charged with the maximum margin current value and configured to output at least one of an image and text for indicating a state in which the battery is charged with the rated current.

8. The system of claim 5, wherein the charging circuit is of a linear charger support type.

9. A battery charging control method of a terminal, the method comprising:
connecting a charger to a terminal in which a battery is mounted; and
performing a maximum margin current charging mode in which the charger charges the battery with a maximum margin current value that is greater than a rated current value of the charger.

10. The method of claim 9, wherein the charger has a voltage level lower than a rated voltage during a period when the battery is charged with the maximum margin current value.

11. The method of claim 10, further comprising at least one of:
outputting at least one of an image and text for indicating a state in which the battery is charged with the maximum margin current value, and
performing a general charging mode in which the battery is charged with the rated current, wherein the maximum margin current value is decreased as the battery is charged.

12. The method of claim 11, wherein, in the general charging mode, the battery is charged with the rated voltage while the battery is charged with the rated current.

13. The method of claim 12, further comprising:
outputting at least one of an image and text for indicating a state in which the battery is charged with the rated current.

14. The method of claim 9, further comprising:
identifying a type of the charger when the charger is connected with the battery being mounted;
obtaining rated current information according to the identified type of the charger;
determining the maximum margin current value of the charger based on the obtained rated current information; and
receiving the rated current information of the charger from an external source.

15. The method of claim 14, wherein a charging circuit disposed on the terminal to transmit the charging current of the charger to the battery is of a linear charger support type.
